# EUROPÄISCHE PATENTSCHRIFT

(11) **EP 3 266 186 B1**
(45) Veröffentlichungstag und Bekanntmachung des Hinweises auf die Patenterteilung: **30.06.2021**
(21) Anmeldenummer: 16727157.6
(22) Anmeldetag: 31.05.2016
(51) Int. Cl.: H04L 29/06

(54) **NETZWERKGERÄT UND VERFAHREN ZUM ZUGRIFF EINER NETZWERKKOMPONENTE AUF EIN DATENNETZ**
NETWORK DEVICE AND METHOD FOR ACCESSING A DATA NETWORK FROM A NETWORK COMPONENT
APPAREIL DE RÉSEAU ET PROCÉDÉ D'ACCÈS À UN COMPOSANT DE RÉSEAU DANS UN RÉSEAU DE DONNÉES

(30) Priorität: 19.06.2015 DE 102015211345
(43) Veröffentlichungstag der Anmeldung: 10.01.2018
(73) Patentinhaber: Siemens Aktiengesellschaft, 80333 München (DE)
(72) Erfinder: BROCKHAUS, Hendrik, 85579 Unterbiberg (DE); BUSSER, Jens-Uwe, 85579 Neubiberg (DE); FALK, Rainer, 85586 Poing (DE)
(86) Internationale Anmeldenummer: PCT/EP2016/062214
(87) Internationale Veröffentlichungsnummer: WO 2016/202570

(56) Entgegenhaltungen:
- US-A1- 2002 104 016
- US-A1- 2007 109 098
- US-A1- 2012 054 830
- "MAC Authentication Bypass", , 31. Mai 2011 (2011-05-31), XP055245246, Gefunden im Internet: URL:http://www.cisco.com/c/en/us/products/ collateral/ios-nx-os-software/identity-bas ed-networking-services/config_guide_c17-66 3759.pdf [gefunden am 2016-01-27]

## Beschreibung

Die Erfindung betrifft ein Netzwerkgerät sowie ein Verfahren zum Zugriff einer Netzwerkkomponente auf ein Datennetz.

Zugangspunkte zu Datennetzen werden häufig mittels geeigneter Verfahren zugangsgeschützt. Für diesen Zugangsschutz wird beispielsweise der Standard IEEE 802.1X verwendet. Dabei erhält eine Netzwerkkomponente nur dann Zugriff zu dem Datennetz, wenn sie sich erfolgreich am zugriffsgeschützten Zugangspunkt mit entsprechenden Authentisierungsdaten authentisiert. Häufig werden als Authentisierungsdaten digitale Zertifikate verwendet, wie z.B. ein dem Betreiber des Datennetzes zugeordnetes Betreiberzertifikat.

Bei der Integration von neuen Netzwerkkomponenten in einem Datennetz besteht häufig das Problem, dass die Authentisierungsdaten bzw. ein entsprechendes Betreiberzertifikat noch nicht auf der Netzwerkkomponente hinterlegt sind, denn das Zertifikat muss erst im Datennetz angefordert werden. Hierfür wird jedoch ein Zugang der neuen Netzwerkkomponente zu dem Datennetz benötigt. Demzufolge müssen die Authentisierungsdaten entweder vorab auf der neuen Netzwerkkomponente hinterlegt werden oder die Konfiguration des Datennetzes muss geändert werden, um der neuen Netzwerkkomponente einen Zugang zu dem Datennetz zu ermöglichen. Die Integration von neuen Netzwerkkomponenten in einem Datennetz ist somit aufwändig.

Die Druckschrift US 2012/0054830 A1 beschreibt ein Netzwerkgerät, welches empfangene Frames von Rechnern mit Adressen in einer im Netzwerkgerät hinterlegten Liste weiterleitet. Bei erfolgreicher gegenseitiger Authentisierung des Netzwerkgeräts mit einem anderen Netzwerkgerät werden auch Frames von dem anderen Netzwerkgerät weitergeleitet, sofern sie von Adressen von Rechnern in einer entsprechenden Liste des anderen Netzwerkgeräts stammen.

Die Druckschrift US 2007/0109098 A1 beschreibt ein System zur Zugangskontrolle zu einem Netzwerk, bei dem ein Zugangspunkt zu dem Netzwerk erst nach einer erfolgreichen Identitätsprüfung eines Nutzers aktiviert wird. Die Identität des Nutzers wird dabei über einen Identitätsleser an einem Ausgangsanschluss erfasst, der zu dem Zugangspunkt führt.

In der Druckschrift US 2002/0104016 A1 ist ein Netzwerkrouter zur Kopplung eines LAN-Netzes (LAN = Local Area Network) mit einem WAN-Netz (WAN = Wide Area Network) beschrieben. Zum Zugang zu dem WAN-Netzwerk ist es erforderlich, dass eine geeignete Smartcard in ein Lesegerät des Routers eingesetzt wird.

Aufgabe der Erfindung ist es, ein Netzwerkgerät und ein Verfahren zum Zugriff einer Netzwerkkomponente auf ein Datennetz zu schaffen, mit denen auf einfache Weise neue Netzwerkkomponenten in dem Datennetz integriert werden können.

Diese Aufgabe wird durch die unabhängigen Patentansprüche gelöst. Weiterbildungen der Erfindung sind in den abhängigen Ansprüchen definiert.

Das erfindungsgemäße Netzwerkgerät, welches vorzugsweise tragbar ist, umfasst zwei Schnittstellen zum Anschluss an einen zugriffsgeschützten Zugangspunkt eines Datennetzes und an eine Netzwerkkomponente, der ein Zugriff auf das Datennetz über den Zugangspunkt ermöglicht werden soll. Jede Schnittstelle kann dediziert zum Anschluss entweder an einen Zugangspunkt oder an eine Netzwerkkomponente vorgesehen sein. Nichtsdestotrotz können gegebenenfalls auch an beiden Schnittstellen ein Zugangspunkt und eine Netzwerkkomponente angeschlossen werden, wobei in diesem Fall das Netzwerkgerät erkennt, an welcher Schnittstelle sich der Zugangspunkt bzw. die Netzwerkkomponente befindet. Vorzugsweise erfolgt der Anschluss des Zugangspunkts bzw. der Netzwerkkomponente an den entsprechenden Schnittstellen kabelgebunden.

Das erfindungsgemäße Netzwerkgerät ist derart ausgestaltet, dass es sich bei angeschlossenem Zugangspunkt und angeschlossener Netzwerkkomponente am Zugangspunkt mit Authentisierungsdaten authentisiert und im Falle einer erfolgreichen Authentisierung einen Zugriff der angeschlossenen Netzwerckomponente auf das Datennetz für zumindest solche (angeschlossenen) Netzwerkkomponenten zulässt, welche ein oder mehrere vorbestimmte Kriterien erfüllen. In einer Variante kann der Zugriff nach erfolgreicher Authentisierung für jede beliebige Netzwerkkomponente zugelassen werden. Vorzugsweise werden jedoch nur Netzwerkkomponenten mit bestimmten Eigenschaften zum Zugriff auf das Datennetz zugelassen, wobei diese Eigenschaften über die vorbestimmten Kriterien festgelegt sind.

Die Erfindung weist den Vorteil auf, dass in einfacher Weise durch Zwischenschaltung des erfindungsgemäßen Netzwerkgeräts zwischen einem zugriffsgeschützten Zugangspunkt und einer zu integrierenden Netzwerkkomponente die Möglichkeit geschaffen wird, dass die Netzwerkkomponente Zugriff auf das Datennetz erhält, um z.B. Authentisierungsdaten für das Datennetz anzufordern, die noch nicht auf der Netzwerkkomponente hinterlegt sind. Nach Erhalt der Authentisierungsdaten kann die Netzwerkkomponente dann direkt mit dem zugriffsgeschützten Zugangspunkt unter Weglassung des Netzwerkgeräts verbunden werden und sich am Datennetz über die Authentisierungsdaten authentisieren. Hierdurch wird eine einfache Integration neuer Netzwerkkomponenten in einem Datennetz erreicht.

Der bevorzugte Anwendungsfall der Erfindung ist der Zugriff auf Datennetze in der Form von Kommunikationsnetzen von Automatisierungssystemen. Mit anderen Worten sind die Schnittstellen des Netzwerkgeräts zum Anschluss an einen Zugangspunkt eines Datennetzes in der Form eines Kommunikationsnetzes eines Automatisierungssystems und zum Anschluss an eine Netzwerkkomponente in der Form eines im Automatisierungssystem zu integrierenden Geräts und vorzugsweise eines Feldgeräts eingerichtet sind. Das Automatisierungssystem kann eine Automatisierungsanlage, insbesondere zur Fertigungsautomatisierung oder Prozessautomatisierung, sein. Ebenso kann das Automatisierungssystem beispielsweise ein Verkehrsautomatisierungssystem, insbesondere für Schienenverkehr, oder ein Gebäudeautomatisierungssystem oder ein Energieautomatisierungssystem sein.

In einer besonders bevorzugten Ausführungsform ist das Netzwerkgerät zur Kommunikation mit einem Layer-2-Zugangspunkt eingerichtet. Der Begriff Layer-2 bezieht sich dabei auf die entsprechende Schicht des OSI-Referenzmodells. Der Zugangspunkt ist somit ein Zugangspunkt für LAN- bzw. WLAN-Netze. Vorzugsweise ist das Netzwerkgerät dabei derart ausgestaltet, dass es sich basierend auf dem Standard IEEE 802.1X an dem Zugangspunkt authentisiert. Dieser Standard ist an sich bekannt und ermöglicht die Zugangskontrolle von Geräten an einem entsprechenden Zugangspunkt.

Gemäß der Erfindung ist das Netzwerkgerät derart ausgestaltet, dass es einen eingeschränkten Zugriff der angeschlossenen Netzwerkkomponente auf das Datennetz zulässt. Hierdurch wird die Sicherheit des Verfahrens erhöht. Vorzugsweise ist der eingeschränkte Zugriff auf ein Anfordern von Authentisierungsdaten für den Zugangspunkt bei einem Registrierungsserver beschränkt.

Alternativ oder zusätzlich ist der eingeschränkte Zugriff auf einen Zugriff auf ein oder mehrere vorbestimmte Teilnetze des Datennetzes beschränkt. Zum Beispiel kann der Zugriff nur auf bestimmte logische VLANs zugelassen werden.

In einer besonders bevorzugten Variante der soeben beschriebenen Ausführungsform ist das Netzwerkgerät derart ausgestaltet, dass der eingeschränkte Zugriff über eine Filterung von Datenverkehr in dem Netzwerkgerät und/oder das Tunneln von Datenverkehr in dem Netzwerkgerät erreicht wird. Hierbei können bekannte Technologien zum Filtern bzw. Tunneln eingesetzt werden.

In einer weiteren bevorzugten Variante umfassen die Authentisierungsdaten, mit denen sich das Netzwerkgerät authentisiert, ein erstes digitales Zertifikat, wobei das erste digitale Zertifikat vorzugsweise ein Zertifikat des Betreibers des Datennetzes ist.

Die Authentisierungsdaten für das Netzwerkgerät sind in einer Variante der Erfindung bei Inbetriebnahme des Netzwerkgeräts darauf gespeichert. Mit anderen Worten können die Authentisierungsdaten bereits vor Inbetriebnahme des Netzwerkgeräts darauf hinterlegt worden sein oder sie können unmittelbar bei Inbetriebnahme darauf gespeichert werden. Alternativ oder zusätzlich kann das Netzwerkgerät auch derart ausgestaltet sein, dass es die Authentisierungsdaten (nach seiner Inbetriebnahme) unter Verwendung von Identifikationsdaten der angeschlossenen Netzwerkkomponente erzeugt. Diese Variante hat den Vorteil, dass im Rahmen der Authentisierung auch die angeschlossene Netzwerkkomponente berücksichtigt wird und hierdurch z.B. eine Authentisierung für bestimmte Netzwerkkomponenten verweigert werden kann.

In einer weiteren Variante des erfindungsgemäßen Netzwerkgeräts sind in dem Netzwerkgerät Informationen hinterlegt, welche festlegen, für welche angeschlossenen Netzwerkkomponenten das Netzwerkgerät den Zugriff auf das Datennetz über den Zugangspunkt zulässt. Auf diese Weise werden solche Netzwerckomponenten spezifiziert, welche das oder die vorbestimmten Kriterien im Sinne von Anspruch 1 erfüllen. Durch diese Variante der Erfindung wird das Datennetz sehr gut gegen die Verwendung von unerlaubten Netzwerkkomponenten geschützt. Die hinterlegten Informationen können explizit oder implizit die Netzwerkkomponenten mit Zugriffserlaubnis festlegen. Zum Beispiel können die Informationen eine Liste von zugelassenen Netzwerkkomponenten enthalten. Ebenso kann die Liste auch nicht erlaubte Netzwerkkomponenten nennen, wobei für alle nicht in der Liste enthaltenen Netzwerkkomponenten der Zugriff erlaubt ist.

In einer weiteren bevorzugten Variante lässt das erfindungsgemäße Netzwerkgerät einen Zugriff auf das Datennetz für solche Netzwerkkomponenten zu, die sich mittels Authentisierungsinformationen, welche sich von den obigen Authentisierungsdaten unterscheiden, erfolgreich bei dem Netzwerkgerät authentisieren. Diese Authentisierungsinformationen umfassen vorzugsweise ein zweites digitales Zertifikat und insbesondere ein Zertifikat des Herstellers der angeschlossenen Netzwerkkomponente. Auf diese Weise wird sichergestellt, dass nur Netzwerkkomponenten bestimmter Hersteller in dem Datennetz integriert werden können.

In einer weiteren bevorzugten Ausführungsform ist das erfindungsgemäße Netzwerkgerät derart ausgestaltet, dass es eine Schnittstelle zur Authentisierung eines Bedieners umfasst, wobei eine oder mehrere vorbestimmte Aktionen, welche durch das Netzwerkgerät automatisch oder ausgelöst von dem Bediener durchführbar sind, erst bei erfolgreicher Authentisierung des Bedieners über die Schnittstelle zugelassen werden. Hierdurch wird ein Missbrauch des Netzwerkgeräts durch unbefugte Personen effizient vermieden. Die vorbestimmte oder die vorbestimmten Aktionen umfassen vorzugsweise die Aktivierung des Netzwerkgeräts zum bestimmungsgemäßen Gebrauch, d.h. die Aktivierung des Netzwerkgeräts zum Authentisieren an einem angeschlossenen Zugangspunkt und zum Zulassen eines Zugriffs einer angeschlossenen Netzwerkkomponente auf das Datennetz. Alternativ oder zusätzlich können die vorbestimmte oder die vorbestimmten Aktionen auch die Konfiguration des Netzwerkgeräts durch den Bediener umfassen, wie z.B. die Spezifikation, für welche angeschlossenen Netzwerkkomponenten das Netzwerkgerät einen Zugriff auf das Datennetz über den Zugangspunkt zulässt.

Die Schnittstelle zur Authentisierung eines Bedieners kann beispielsweise eine Tastatur und/oder einen Leser für biometrische Daten und/oder einen Leser für Chipkarten und/oder einen mechanischen Schlüsselschalter umfassen. Unter mechanischem Schlüsselschalter ist dabei ein Schalter zu verstehen, der mittels eines zugeordneten mechanischen Schlüssels betätigt werden kann, wobei die Authentisierung dann erfolgreich ist, wenn der Schalter mittels des zugeordneten mechanischen Schlüssels betätigt wird.

In einer weiteren bevorzugten Ausgestaltung umfasst das Netzwerkgerät eine Schnittstelle zum manuellen Eingeben und/oder zum Einlesen von Identifikationsdaten von Netzwerkkomponenten. Die Schnittstelle zum manuellen Eingeben kann z.B. eine Tastatur sein, wobei diese Tastatur gegebenenfalls auch die obige Schnittstelle zur Authentisierung darstellen kann. Die Schnittstelle zum Einlesen von Identifikationsdaten kann z.B. als Codeleser (z.B. Barcodeleser) oder RFID-Leser ausgestaltet sein. Vorzugsweise lässt das Netzwerkgerät einen Zugriff auf das Datennetz nur für Netzwerkkomponenten mit über die Schnittstelle eingegebenen und/oder eingelesenen Identifikationsdaten zu.

Die Erfindung betrifft darüber hinaus ein Verfahren zum Zugriff einer Netzwerkkomponente auf ein Datennetz über einen zugriffsgeschützten Zugangspunkt. Dabei sind der Zugangspunkt und die Netzwerkkomponente an dem erfindungsgemäßen Netzwerkgerät bzw. einer bevorzugten Ausführungsform des erfindungsgemäßen Netzwerkgeräts über dessen Schnittstellen angeschlossen. Im Rahmen des Verfahrens authentisiert sich das Netzwerkgerät am Zugangspunkt mit Authentisierungsdaten und lässt im Falle einer erfolgreichen Authentisierung einen Zugriff der angeschlossenen Netzwerkkomponente auf das Datennetz über den Zugangspunkt für zumindest solche Netzwerkkomponenten zu, welche ein oder mehrere vorbestimmte Kriterien erfüllen, wobei das Netzwerkgerät einen eingeschränkten Zugriff der angeschlossenen Netzwerkkomponente auf das Datennetz zulässt und der eingeschränkte Zugriff auf ein Anfordern von Authentisierungsdaten für den Zugangspunkt bei einem Registrierungsserver beschränkt ist.

In einer besonders bevorzugten Ausführungsform dieses Verfahrens kommuniziert der zugriffsgeschützte Zugangspunkt zur Überprüfung der Authentisierungsdaten mit einem Authentisierungsserver, in dem Regeln für eine erfolgreiche Authentisierung festgelegt sind.

In einer weiteren bevorzugten Ausführungsform wird das Netzwerkgerät in dem Verfahren nur dann vom zugriffsgeschützten Zugangspunkt als zuverlässig anerkannt, wenn ein oder mehrere Kriterien erfüllt sind. Mit anderen Worten ist das Netzwerkgerät in dem Verfahren nur dann verwendbar, wenn das oder die Kriterien erfüllt sind. Das oder die Kriterien sind insbesondere derart ausgestaltet, dass das Netzwerkgerät nur dann verwendbar ist, wenn sich das Datennetz in einem vorbestimmten Betriebsmodus, z.B. einem Wartungsmodus, befindet. Ist dies nicht der Fall, lässt das Verfahren der Erfindung die Verwendung des Netzwerkgeräts nicht zu.

Ausführungsbeispiele der Erfindung werden nachfolgend anhand der beigefügten Figuren detailliert beschrieben.

Es zeigen:
- Fig. 1: eine schematische Darstellung, welche den Betrieb einer Ausführungsform des erfindungsgemäßen Netzwerkgeräts für den Zugriff auf ein Datennetz verdeutlicht;
- Fig. 2: eine schematische Darstellung einer ersten Bauform des erfindungsgemäßen Netzwerkgeräts; und
- Fig. 3: eine schematische Darstellung einer zweiten Bauform des erfindungsgemäßen Netzwerkgeräts.

Im Folgenden wird eine Ausführungsform der Erfindung basierend auf einem Netzwerkgerät beschrieben, welches an einen zugriffsgeschützten Layer-2-Zugangspunkt (d.h. Ethernet/LAN bzw. WLAN) angeschlossen wird und an diesem Zugangspunkt den Zugriff einer Netzwerkkomponente auf das Datennetz ermöglicht, zu dem der Layer-2-Zugangspunkt gehört.

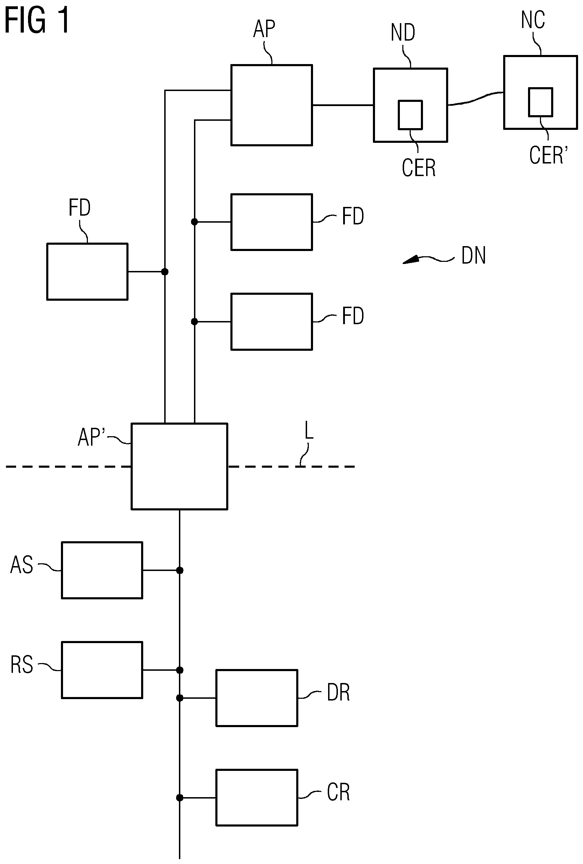

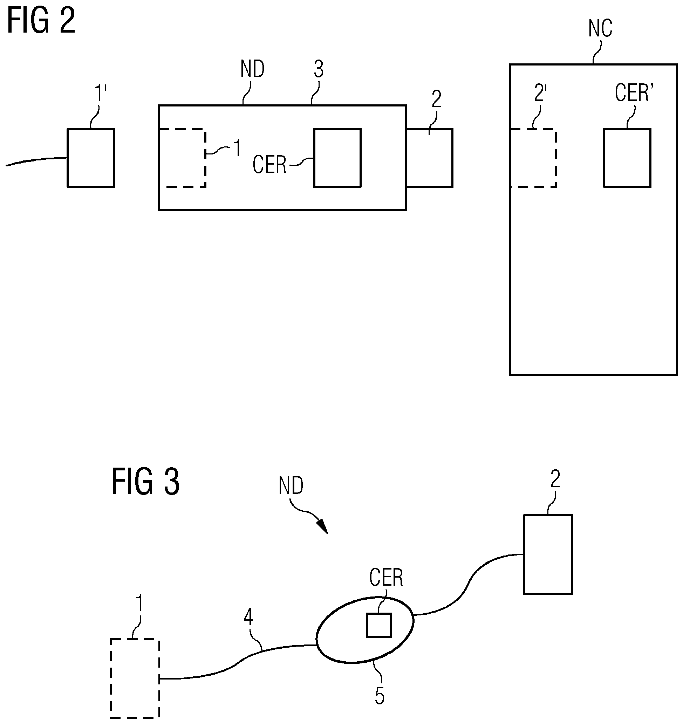

In Fig. 1 ist das erfindungsgemäße Netzwerkgerät mit ND (ND = Network Device) bezeichnet. Das Netzwerkgerät verfügt über zwei Schnittstellen, welche aus den Bauformen der Fig. 2 und Fig. 3 ersichtlich sind. Über eine der Schnittstellen wird mittels eines Kabels der zugriffsgeschützte Layer-2-Zugangspunkt AP eines Datennetzes DN angeschlossen. Über die andere Schnittstelle ist eine Netzwerkkomponente NC angeschlossen, für die ein Zugriff auf das Datennetz DN ermöglicht werden soll.

In der hier beschriebenen Ausführungsform ist das Datennetz das Kommunikationsnetz eines Automatisierungssystems, wie z.B. einer Automatisierungsanlage zur Fertigungsautomatisierung oder zur Prozessautomatisierung. Ebenso kann das Automatisierungssystem beispielsweise eine Anlage zur Verkehrsautomatisierung, insbesondere für Schienenverkehr, oder ein Gebäudeautomatisierungssystem oder ein Energieautomatisierungssystem darstellen. Das Datennetz DN umfasst eine Vielzahl von Netzknoten, wobei in Fig. 1 als Netzknoten neben dem Zugangspunkt AP mehrere Feldgeräte FD, der weitere Zugangspunkt AP', ein Authentisierungsserver AS, ein Registrierungsserver RS sowie ein Diagnoserechner DR und ein Steuerrechner CR wiedergegeben sind. Der Teil des Datennetzes DN, der oberhalb der gestrichelten Linie L liegt, stellt ein lokales Zugangsnetz des Datennetzes DN mit dem zugriffsgeschützten Zugangspunkt AP dar, wohingegen der Teil des Datennetzes unterhalb der Linie L ein Backbone-Netz darstellt, welches mit dem oberen Teil des Datennetzes über den Zugangspunkt AP' kommunizieren kann.

Um auf das Datennetz DN über den zugriffsgeschützten Zugangspunkt AP zuzugreifen, muss sich ein Gerät erfolgreich mittels Authentisierungsdaten an diesem Zugangspunkt authentisieren. In dem hier dargestellten Szenario soll eine neue Netzwerckomponente NC in das Datennetz über den Zugangspunkt AP angeschlossen werden. Bei der Netzwerkkomponente NC handelt es sich um ein Feldgerät des Automatisierungssystems, das gegen ein altes Feldgerät getauscht wurde. Das Feldgerät kann beispielsweise ein Weichenantriebssteuergerät oder ein Gleisbelegmelder im Falle eines Automatisierungssystems für Schienenverkehr sein. Dabei besteht das Problem, dass in der neuen Netzwerkkomponente NC bei dessen Auslieferung noch keine Authentisierungsdaten für den Zugriff auf das Datennetz DN hinterlegt sind. Diese müssen durch die Netzwerkkomponente NC erst im Datennetz DN bei dem Registrierungsserver RS angefordert werden. Hierfür braucht die Netzwerkkomponente NC jedoch einen Zugang zu dem Datennetz. Dieser Zugang wird ihr durch die erfindungsgemäße Netzwerkkomponente ND ermöglicht.

In der Netzwerkkomponente ND sind bereits Authentisierungsdaten zur Authentisierung an dem zugriffsgeschützten Zugangspunkt AP hinterlegt. Diese Authentisierungsdaten beruhen auf einem digitalen Zertifikat CER, das von dem Betreiber des Datennetzes stammt. Beim Anschluss des Netzwerkgeräts ND an den Zugangspunkt AP authentisiert es sich mit dem Zertifikat CER an diesem Zugangspunkt. Hierfür wird der an sich bekannte Standard IEEE 802.1X verwendet. Deshalb wird das Netzwerkgerät ND im Folgenden auch als 802.1X-Proxy bezeichnet.

Bei der Authentisierung mit dem Standard IEEE 802.1X kommuniziert der zugriffsgeschützte Zugangspunkt AP mit dem Authentisierungsserver AS des Datennetzes DN, der die vom Netzwerkgerät stammenden Authentisierungsdaten verifiziert, wobei bei erfolgreicher Verifikation der Zugang zu dem Datennetz über den Zugangspunkt AP für das Netzwerkgerät ND freigeschaltet wird. Vorzugsweise erfolgt die Authentisierung basierend auf dem Protokoll EAP (EAP = Extensible Authentication Protocol) bzw. basierend auf dem Protokoll EAP-TLS, welches für eine zertifikatsbasierte Authentisierung eingesetzt wird. Der Zugangspunkt und der Authentisierungsserver kommunizieren vorzugsweise über das Protokoll RADIUS bzw. Diameter.

Nach Freischalten dieses Zugangs schaltet das Gerät ND auch den Zugang der Netzwerkkomponente NC zu dem Datennetz ND durch, sofern die Netzwerkkomponente NC eine bestimmte Eigenschaft erfüllt. In der hier beschriebenen Ausführungsform besteht diese Eigenschaft darin, dass die Netzwerkkomponente über eine Authentisierungsinformation in der Form eines weiteren digitalen Zertifikats CER' verfügt, wobei dieses Zertifikat ein Zertifikat des Herstellers der Netzwerkkomponente NC ist. Das Zertifikat CER' wird von dem Netzwerkgerät ND überprüft und bei erfolgreicher Verifikation lässt dann das Netzwerkgerät ND den Zugriff der Netzwerkkomponente NC auf das Datennetz DN über den Zugangspunkt AP zu. Der Netzwerckomponente wird dann ermöglicht, sich bei dem Registrierungsserver RS anzumelden und Authentisierungsdaten in der Form eines gültigen Zertifikats für das Datennetz DN zu beantragen. Nachdem die beantragten Authentisierungsdaten von dem Registrierungsserver RS an die Netzwerkkomponente NC übermittelt wurden, wird das Netzwerkgerät ND nicht mehr benötigt, d.h. die Netzwerkkomponente NC kann dann direkt an den Zugangspunkt AP ohne Zwischenschaltung der Netzwerkkomponente angeschlossen und verwendet werden. Die Integration der neuen Netzwerkkomponente NC in das Datennetz DN ist dann abgeschlossen.

Je nach Ausgestaltung des erfindungsgemäßen Netzwerkgeräts kann dieses bei erfolgreicher Authentisierung der Netzwerckomponente NC durch das Zertifikat CER' gegebenenfalls alle ausgetauschten Daten zwischen Netzwerkkomponente NC und Datennetz DN weiterleiten. Vorzugsweise erfolgt jedoch eine Filterung des Netzwerkverkehrs, um z.B. nur Daten durchzulassen, welche im Rahmen des Anforderns eines Zertifikats beim Registrierungsserver RS benötigt werden. Ferner kann auch nur der Zugriff auf bestimmte Teile des Datennetzes zugelassen werden, was z.B. über das Tunneln von Netzwerkverkehr in dem Netzwerkgerät ND erreicht wird. Es können dabei an sich bekannte Verfahren zur Datentunnelung eingesetzt werden, wie z.B. TLS, IPsec oder L2TP. Gegebenenfalls kann auch der Netzwerkverkehr durch die Netzwerkkomponente ND limitiert werden.

In einer bevorzugten Ausführungsform der Erfindung kann das Netzwerkgerät ND nur unter vorbestimmten Bedingungen zur Kommunikation mit dem Datennetz DN zugelassen werden. Diese Bedingungen können z.B. als Regeln (englisch: policy) in dem zugriffsgeschützten Zugangspunkt hinterlegt sein. Beispielsweise kann eine Kommunikation des 802.1X-Proxys mit dem Datennetz nur dann erlaubt werden, wenn sich das Automatisierungssystem in einem Wartungsmodus befindet, d.h. in einem regulären operativen Betrieb kann dem Netzwerkgerät der Zugang zu dem Automatisierungsnetz verweigert werden. Eine Information, die den aktuellen Betriebsmodus des Automatisierungssystems angibt, kann beispielsweise von dem Steuerrechner CR über das Datennetzwerk bereitgestellt werden.

In einer weiteren Ausführungsform der Erfindung ist das Datennetz in mehrere unterschiedliche Teilnetze aufgeteilt, die z.B. über sog. VLANs (VLAN = Virtual Local Area Network) realisiert sein können. Dabei kann ein Teil des Netzes rein die Steuerungskommunikation in einem Automatisierungssystem betreffen und ein anderer Teil rein die Diagnosenetzwerkkommunikation in dem Automatisierungssystem. In einer solchen Ausführungsform kann der erfindungsgemäße 802.1X-Proxy z.B. nur Zugang zu dem Teilnetz zur Diagnosenetzwerkkommunikation erhalten. Ebenso kann jedoch auch der 802.1X-Proxy selbst den Zugriff der angeschlossenen Netzwerkkomponente nur auf ein Teilnetz zulassen. Dies kann dadurch erreicht werden, dass das Netzwerkgerät selbst zu allen Datenpaketen einen entsprechenden VLAN-Tag des Diagnosenetzwerks hinzufügt. In dem Szenario der Fig. 1 ist dabei der Steuerungsrechner CR Teil eines entsprechenden Teilnetzes zur Steuerungskommunikation, wohingegen der Diagnoserechner DR Teil eines entsprechenden Teilnetzes zur Diagnosenetzwerkkommunikation ist.

In der anhand von Fig. 1 erläuterten Ausführungsform sind vorab Authentisierungsdaten in der Form des digitalen Zertifikats CER auf dem Netzwerkgerät ND hinterlegt. In einer abgewandelten Variante stellt das Netzwerkgerät erst nach Anschluss der zu registrierenden Netzwerkkomponente NC für sich selbst ein Zertifikat für die Authentisierung basierend auf dem Standard IEEE 802.1X aus. Mit anderen Worten beinhaltet der 802.1X-Proxy eine lokale Zertifizierungs-Autorität CA (CA = Certification Authority) zur Ausstellung eines Zertifikats. Ein solches Ausstellen von Zertifikaten ist beispielsweise aus SSL-Proxys bekannt, die unter anderem von Firmen verwendet werden, um SSL-TLS-Kommunikation zu überwachen.

Das ausgestellte Zertifikat enthält Identifikationsinformationen der verbundenen Netzwerkkomponente NC. Dieses Zertifikat wird vom Datennetz des Automatisierungssystems als gültig erkannt, so dass anschließend der Netzwerkzugriff des Netzwerkgeräts sowie der daran angeschlossenen Netzwerkkomponente freigegeben werden kann. Diese Variante der Erfindung hat den Vorteil, dass das Datennetz eine Information über die Identität der Netzwerkkomponente erhält. Somit kann abhängig von vorbestimmten Regeln (z.B. bekannte Seriennummern von zu registrierenden Netzwerkkomponenten) eine Prüfung durchgeführt werden, ob ein Netzwerkzugriff zulässig ist. Mit anderen Worten ist somit eine Authentisierung des Netzwerkgeräts nur dann erfolgreich, wenn die Identifikationsdaten gemäß vorbestimmten Regeln zulässig sind.

Nachfolgend werden anhand von Fig. 2 und Fig. 3 verschiedene Bauformen eines erfindungsgemäßen Netzwerkgeräts ND erläutert. In allen beschriebenen Bauformen kann die Energieversorgung des Netzwerkgeräts beispielsweise mittels integrierter Batterie, über USB-Kabel oder basierend auf Power-Over-Ethernet erfolgen. In Fig. 2 ist eine Bauform dargestellt, bei der das Netzwerkgerät ND als eine Box 3 mit einer ersten Schnittstelle 1 in der Form einer Buchse und einer zweiten Schnittstelle 2 in der Form eines Steckers ausgeführt sind. Buchse und Stecker entsprechen vorzugsweise der Bauart RJ-45, die üblicherweise bei der Verbindung von Komponenten in LAN-Netzen eingesetzt wird. Über die Buchse 1 erfolgt der Anschluss eines korrespondierenden Steckers 1' eines Netzwerckabels, welches hin zu dem Zugangspunkt AP der Fig. 1 führt. Demgegenüber wird der Stecker 2 in eine korrespondierende Buchse 2' gesteckt, die an der Netzwerkkomponente NC ausgebildet ist. In Fig. 2 erkennt man ferner, dass auf dem Netzwerkgerät ND das Betreiberzertifikat CER gespeichert ist, wohingegen auf der Netzwerkkomponente NC das Herstellerzertifikat CER' hinterlegt ist. Die Bauform der Fig. 2 kann geeignet abgewandelt werden. In einer vorteilhaften Modifikation ragt der Stecker 2 mittels eines kurzen LAN-Kabels aus der Box 3 heraus, um auch bei beengten Platzverhältnissen gut angesteckt werden zu können.

Eine weitere Bauform des Netzwerkgeräts ND ist in Fig. 3 gezeigt. In dieser Bauform ist das Netzwerkgerät als ein LAN-Verlängerungskabel 4 ausgeführt, wobei in einem Abschnitt 5 des LAN-Kabels die Logik des Netzwerkgeräts integriert ist. Dort ist auch das Zertifikat CER hinterlegt. Die Schnittstellen des Netzwerkgeräts sind die entsprechenden Enden des LAN-Verlängerungskabels, wobei das eine Ende durch eine Buchse 1 und das andere Ende durch einen Stecker 2 gebildet wird, wobei Buchse und Stecker vorzugsweise wieder der Bauart RJ-45 entsprechen.

In einer weiteren, nicht gezeigten Bauform enthält das Netzwerkgerät anstatt von einem Stecker und einer Buchse zwei LAN-Buchsen, die über jeweils ein zusätzliches LAN-Verbindungskabel mit dem Zugangspunkt AP sowie der Netzwerkkomponente NC verbunden werden können. Ebenso ist es in einer weiteren Bauform möglich, dass das Netzwerkgerät über zwei LAN-Kabel mit entsprechenden Steckern verfügt, die auf einer Seite mit einer Buchse des Zugangspunkts AP und auf der anderen Seite mit einer Buchse der Netzwerkkomponente NC verbunden werden können. Die Stecker basieren vorzugsweise wieder auf der Bauart RJ-45.

Die beiden Anschlüsse bzw. Schnittstellen 1, 2 zur Verbindung mit dem Zugangspunkt AP bzw. der Netzwerkkomponente NC sind an dem Netzwerkgerät ND vorzugsweise unterschiedlich gekennzeichnet, damit ein Anwender weiß, welchen Anschluss er mit dem Datennetz und welchen er mit der Netzwerkkomponente verbinden muss. Alternativ besteht jedoch auch die Möglichkeit, dass jede der Schnittstellen sowohl für den Anschluss an einen Zugangspunkt als auch den Anschluss an eine Netzwerkkomponente genutzt werden kann. In diesem Fall versucht das Netzwerkgerät nach dem Anschluss des Zugangspunkts und der Netzwerkkomponente eine Authentisierung sowohl an der einen als auch an der anderen Schnittstelle durchzuführen. Ist die Authentisierung auf einer Seite erfolgreich, so stellt das Netzwerkgerät entsprechend die Verbindung in das Datennetz automatisch auf der anderen Seite bereit.

Anstatt von gängigen RJ-45-Verbindungen können in dem Netzwerkgerät auch andere Schnittstellen verwendet werden, wenn die anzuschließende Netzwerkkomponente bzw. der Zugangspunkt über andere Schnittstellen verfügt, beispielsweise über Schnittstellen für Lichtwellenleiter. Zusätzlich oder alternativ kann z.B. eine USB-Schnittstelle am Netzwerkgerät verwendet werden, über welche dieses Gerät mit der Netzwerkkomponente bzw. dem Zugangspunkt verbunden wird.

Die Aktivierung des Netzwerkgeräts ND kann je nach Ausgestaltung automatisch über das Einstecken der Netzwerkverbindungen an den entsprechenden Schnittstellen erfolgen. Gegebenenfalls kann die Aktivierung jedoch auch manuell durch einen Bediener durchgeführt werden, z.B. durch einen Druck auf einen eingebauten Taster.

Um ein unberechtigtes Eindringen in das Datennetz mittels eines missbrauchten 802.1X-Proxys zu verhindern, ist in einer Variante der Erfindung bei der Aktivierung des Proxys eine Authentisierung des Bedieners erforderlich. Diese Authentisierung kann beispielsweise mittels des Einsteckens einer Chipkarte, über eine kontaktlos (z.B. mit RFID) mit dem Netzwerkgerät kommunizierende Chipkarte, über die Eingabe einer PIN an einer Tastatur im Gehäuse des Netzwerkgeräts, über eine biometrische Authentifizierung (z.B. mittels eines Fingerabdrucksensors) oder über einen mechanischen Schlüsselschalter erfolgen.

Gegebenenfalls können an eine Authentisierung eines Bedieners auch bestimmte Berechtigungen gekoppelt sein. Dabei können ggf. verschiedene Berechtigungen für unterschiedliche Bediener festgelegt werden. Insbesondere kann ein bestimmter Bediener als Administrator definiert werden, wobei nur dieser Bediener nach erfolgreicher Authentisierung eine Konfiguration des Netzwerkgeräts vornehmen kann. Im Rahmen dieser Konfiguration kann der Bediener beispielsweise festlegen, in welchem Zeitraum, an welchem Ort, welche Typen von Netzwerkkomponenten zur Kommunikation mit dem Datennetz durch das Netzwerkgerät zugelassen werden sollen. Dadurch wird die Missbrauchsmöglichkeit eines 802.1X-Proxys reduziert.

In den oben beschriebenen Ausführungsformen wurde ein Zugang von Netzwerkkomponenten zu dem Datennetz durch das Netzwerkgerät nur zugelassen, wenn die Netzwerkkomponente über ein entsprechendes digitales Herstellerzertifikat verfügt. Mit anderen Worten sind in dem Netzwerkgerät Informationen zur Verifikation dieses Herstellerzertifikats hinterlegt, wie z.B. das Root-Zertifikat der Instanz, welche die Herstellerzertifikate ausstellt, oder ein Fingerprint (Hash) des digitalen Herstellerzertifikats. Gegebenenfalls können auch andere bzw. weitere Informationen zur Identifizierung bzw. Authentisierung von zulässigen Netzwerkkomponenten in dem erfindungsgemäßen Netzwerkgerät hinterlegt sein. Dabei kann es sich beispielsweise um zugelassene Seriennummern oder öffentliche Schlüssel handeln. Nur wenn der 802.1X-Proxy die angeschlossene Netzwerkkomponente als ein zulässiges Gerät identifiziert bzw. authentisiert, wird dessen Netzwerkkommunikation durchgeschaltet.

Im Vorangegangenen wurde die Authentisierung des Netzwerkgeräts gegenüber dem Zugangspunkt basierend auf dem Standard IEEE 802.1X durchgeführt. Alternativ können jedoch auch andere Standards verwendet werden. Zum Beispiel kann die Authentisierung auch über TLS (TLS = Transport Layer Security) oder PANA (PANA = Protocol for Carrying Authentication for a Network Access) erfolgen. Das Speichern von Authentisierungsinformationen für zulässige Netzwerkkomponenten ist vorzugsweise in einem speziell geschützten Betriebsmodus des 802.1X-Proxys möglich. Dadurch kann z.B. ein Sicherheitsadministrator des Datennetzes zuerst zulässige Geräte registrieren. Ein Wartungstechniker kann dann nur die in dem 802.1X-Proxy registrierten Geräte vor Ort in das Datennetz einbinden. Die Authentisierungsinformationen können manuell in den 802.1X-Proxy über einen Bediener eingegeben werden, der sich vorzugsweise vorab geeignet am Gerät authentisiert hat. Gegebenenfalls können die Authentisierungsdaten auch über einen Barcode-Leser oder RFID-Leser erfasst werden, der am Netzwerkgerät vorgesehen ist. Der Barcode bzw. RFID-Tag kann an der Netzwerkkomponente, an dessen Verpackung oder an einem Begleitdokument angebracht sein.

In einer weiteren bevorzugten Ausführungsform stellt das Netzwerkgerät eine gesicherte Verbindung (z.B. TLS- oder IPsec-Tunnel) nur zu bestimmten Knoten bzw. Komponenten im Datennetz bereit, beispielsweise zu einer lokalen Registrierungs-Behörde, die in Fig. 1 durch den Registrierungsserver RS angedeutet ist. Mit anderen Komponenten kann die angeschlossene Netzwerkkomponente nicht kommunizieren. Dadurch wird erreicht, dass die zu registrierende Netzwerkkomponente nicht direkt auf Netzwerkebene mit dem Datennetz verbunden ist. Im Gegensatz zu einem Quarantäne-VLAN, wie es aus dem Standard IEEE 802.1X bekannt ist, müssen die Zugangspunkte des Datennetzes dabei keine Quarantäne-VLAN/VLAN-Separierung unterstützen. Dies erleichtert die Konfiguration der Zugangspunkte und es können einfache Zugangspunkte mit wenig Intelligenz verwendet werden.

In einer weiteren Variante der Erfindung kann der 802.1X-Proxy dazu verwendet werden, jeglicher Netzwerkkomponente einen Zugang zu dem Datennetz zu gewähren, ohne Authentisierungsdaten dieser Komponenten zu überprüfen. Ein solcher Zugang ist vorzugsweise zeitlich begrenzt. Dieser Zugang kann z.B. für Wartungsarbeiten genutzt werden. In diesem Fall ist die an dem 802.1X-Proxy angeschlossene Netzwerkkomponente der Rechner bzw. das Laptop eines externen Wartungstechnikers.

Die im Vorangegangenen beschriebenen Ausführungsformen der Erfindung weisen eine Reihe von Vorteilen auf. Mittels des erfindungsgemäßen Netzwerkgeräts kann ein Service-Techniker bei Neuinstallation oder Austausch einer Netzwerkkomponente (z.B. eines Feldgeräts) dessen Initialisierung auf einfache Weise vornehmen. Hierzu schaltet er zunächst zwischen dem entsprechenden Zugangspunkt und der Netzwerkkomponente das erfindungsgemäße Netzwerkgerät. Dieses lässt dann einen zumindest eingeschränkten Zugriff der Netzwerkkomponente auf das Datennetz zu, so dass die Netzwerkkomponente Authentisierungsdaten im Datennetz anfordern kann. Nach Erhalt der Authentisierungsdaten kann das Netzwerkgerät dann entfernt werden und die Netzwerkkomponente direkt an dem zugriffsgeschützten Zugangspunkt angeschlossen werden.

Die Freischaltung eines Ports an dem Zugangspunkt, der eine Kommunikation mit der an dem Netzwerkgerät angeschlossenen Netzwerkkomponente ermöglicht, kann sicher und sehr anwenderfreundlich am Standort des Netzwerkgeräts durchgeführt werden, ohne dass die Administration des Zugangspunkts erforderlich ist. Insbesondere ist es nicht erforderlich, den Standort des Zugangspunkts aufzusuchen oder den genauen Port am Zugangspunkt festzustellen.

Ohne die Verwendung des erfindungsgemäßen Netzwerkgeräts wäre es erforderlich, temporär die Konfiguration des Zugangspunkts zu ändern, um einer Netzwerkkomponente einen Zugriff auf das Datennetz zu ermöglichen. Dies hat jedoch den Nachteil, dass oftmals vergessen wird, die Konfiguration wieder zurückzunehmen, sobald die Netzwerkkomponente fehlerfrei an dem Datennetz läuft. Dadurch können Sicherheitslücken bleiben, die nicht bemerkt werden. Im Gegensatz hierzu ist das angeschlossene Netzwerkgerät deutlich auffälliger und wird weniger leicht vergessen. Spätestens beim nächsten Gebrauch des Netzwerkgeräts fällt dem Techniker das Fehlen des Geräts auf.

Das erfindungsgemäße Netzwerkgerät muss nur kurz zwischen Zugangspunkt und Netzwerkkomponente zwischengeschaltet werden, bis die Initialisierung bzw. Anmeldung der Netzwerkkomponente im Datennetz erfolgreich war. Anschließend kann es wieder abgezogen werden, woraufhin die Freischaltung des entsprechenden Ports am Zugangspunkt automatisch endet.

Durch zusätzliche Authentifizierungsmechanismen des Bedieners an dem erfindungsgemäßen Netzwerkgerät kann der Missbrauch eines gestohlenen Geräts durch Dritte verhindert werden. Gegebenenfalls können durch eine Administration am entsprechenden Authentisierungsserver im Datennetz die Authentisierungsdaten von verlorenen Netzwerkgeräten widerrufen werden, so dass diese nicht mehr verwendbar sind.

## Patentansprüche

1. Netzwerkgerät (ND), umfassend zwei Schnittstellen (1, 2) zum Anschluss an einen zugriffsgeschützten Zugangspunkt (AP) eines Datennetzes (DN) und an eine Netzwerkkomponente (NC), der ein direkter Zugriff auf das Datennetz (DN) über den Zugangspunkt (AP) ermöglicht werden soll, wobei in der Netzwerkkomponente (NC) noch keine Authentisierungsdaten für den Zugriff auf das Datennetz (DN) hinterlegt sind, wobei das Netzwerkgerät (ND) derart ausgestaltet ist, dass es sich bei angeschlossenem Zugangspunkt (AP) und angeschlossener Netzwerkkomponente (NC) mit Authentisierungsdaten (CER) am Zugangspunkt (AP) authentisiert und im Falle einer erfolgreichen Authentisierung einen eingeschränkten Zugriff der angeschlossenen Netzwerkkomponente (NC) auf das Datennetz (DN) über den Zugangspunkt (AP) für zumindest solche Netzwerkkomponenten (NC) zulässt, welche ein oder mehrere vorbestimmte Kriterien erfüllen,
wobei der eingeschränkte Zugriff auf ein Anfordern von Authentisierungsdaten für den Zugangspunkt (AP) durch die Netzwerkkomponente (NC) bei einem Registrierungsserver (RS) im Datennetz (DN) beschränkt ist.

2. Netzwerkgerät nach Anspruch 1, wobei die Schnittstellen (1, 2) des Netzwerkgeräts (ND) zum Anschluss an einen Zugangspunkt (AP) eines Datennetz (DN) in der Form eines Kommunikationsnetzes eines Automatisierungssystems und zum Anschluss an eine Netzwerkkomponente in der Form eines im Automatisierungssystem zu integrierenden Geräts eingerichtet sind.

3. Netzwerkgerät nach Anspruch 1 oder 2, wobei das Netzwerkgerät (ND) zur Kommunikation mit einem Layer-2-Zugangspunkt (AP) eingerichtet ist.

4. Netzwerkgerät nach Anspruch 1, wobei der eingeschränkte Zugriff auf einen Zugriff auf ein oder mehrere vorbestimmte Teilnetze des Datennetzes (DN) beschränkt ist.

5. Netzwerkgerät nach Anspruch 1, wobei das Netzwerkgerät (ND) derart ausgestaltet ist, dass der eingeschränkte Zugriff über eine Filterung von Datenverkehr in dem Netzwerkgerät (ND) und/oder das Tunneln von Datenverkehr in dem Netzwerkgerät (ND) erreicht wird.

6. Netzwerkgerät nach einem der vorhergehenden Ansprüche, wobei die Authentisierungsdaten (CER), mit denen sich das Netzwerkgerät (ND) authentisiert, ein erstes digitales Zertifikat umfassen.

7. Netzwerkgerät nach einem der vorhergehenden Ansprüche, wobei die Authentisierungsdaten (CER) bei Inbetriebnahme des Netzwerkgeräts (ND) darauf gespeichert sind oder dass das Netzwerkgerät (ND) derart ausgestaltet ist, dass es die Authentisierungsdaten (CER) unter Verwendung von Identifikationsdaten der angeschlossenen Netzwerkkomponente (NC) erzeugt.

8. Netzwerkgerät nach einem der vorhergehenden Ansprüche, wobei in dem Netzwerkgerät (ND) Informationen hinterlegt sind, welche festlegen, für welche angeschlossenen Netzwerkkomponenten (NC) das Netzwerkgerät (ND) den Zugriff auf das Datennetz (DN) über den Zugangspunkt (AP) zulässt.

9. Netzwerkgerät nach Anspruch 8, wobei das Netzwerkgerät (ND) einen Zugriff auf das Datennetz (DN) für solche Netzwerkkomponenten (NC) zulässt, die sich mittels Authentisierungsinformationen (CER'), welche sich von den Authentisierungsdaten (CER) unterscheiden, erfolgreich bei dem Netzwerkgerät (ND) authentisieren.

10. Netzwerkgerät nach einem der vorhergehenden Ansprüche, wobei das Netzwerkgerät (ND) derart ausgestaltet ist, dass es eine Schnittstelle zur Authentisierung eines Bedieners umfasst, wobei ein oder mehrere vorbestimmte Aktionen, welche durch das Netzwerkgerät (ND) automatisch oder ausgelöst von dem Bediener durchführbar sind, erst bei erfolgreicher Authentisierung des Bedieners über die Schnittstelle zugelassen werden, wobei die vorbestimmte oder die vorbestimmten Aktionen die Aktivierung des Netzwerkgeräts (ND) zum Authentisieren an einem angeschlossenen Zugangspunkt (AP) und zum Zulassen eines Zugriffs einer angeschlossenen Netzwerkkomponente (NC) auf das Datennetz (DN) und/oder die Konfiguration des Netzwerkgeräts (ND) durch den Bediener umfassen.

11. Netzwerkgerät nach Anspruch 10, wobei die Schnittstelle zur Authentisierung eines Bedieners eine Tastatur und/oder einen Leser für biometrische Daten und/oder einen Leser für Chipkarten und/oder einen mechanischen Schlüsselschalter umfasst.

12. Netzwerkgerät nach einem der vorhergehenden Ansprüche, wobei das Netzwerkgerät (ND) eine Schnittstelle zum manuellen Eingeben und/oder zum Einlesen von Identifikationsdaten von Netzwerkkomponenten (NC) umfasst, wobei das Netzwerkgerät (ND) einen Zugriff auf das Datennetz (DN) nur für Netzwerckomponenten (NC) mit über die Schnittstelle eingegebenen und/oder eingelesenen Identifikationsdaten zulässt.

13. Verfahren zum direkten Zugriff einer Netzwerkkomponente (NC) auf ein Datennetz (DN) über einen zugriffsgeschützten Zugangspunkt (AP), wobei in der Netzwerkkomponente (NC) noch keine Authentisierungsdaten für den Zugriff auf das Datennetz (DN) hinterlegt sind, wobei der Zugangspunkt (AP) und die Netzwerkkomponente (NC) an ein Netzwerkgerät (ND) nach einem der vorhergehenden Ansprüche über dessen Schnittstellen (1, 2) angeschlossen sind, wobei sich das Netzwerkgerät (ND) am Zugangspunkt (AP) mit Authentisierungsdaten (CER) authentisiert und im Falle einer erfolgreichen Authentisierung einen eingeschränkten Zugriff der angeschlossenen Netzwerkkomponente (NC) auf das Datennetz (DN) über den Zugangspunkt (AP) für zumindest solche Netzwerkkomponenten (NC) zulässt, welche ein oder mehrere vorbestimmte Kriterien erfüllen,
wobei der eingeschränkte Zugriff auf ein Anfordern von Authentisierungsdaten für den Zugangspunkt (AP) durch die Netzwerkkomponente (NC) bei einem Registrierungsserver (RS) im Datennetz (DN) beschränkt ist.

14. Verfahren nach Anspruch 13, wobei der Zugangspunkt (AP) zur Überprüfung der Authentisierungsdaten (CER) mit einem Authentisierungsserver (AS) kommuniziert, in dem Regeln für eine erfolgreiche Authentisierung hinterlegt sind.

## Claims

1. Network device (ND), comprising two interfaces (1, 2) for connection to an access-protected access point (AP) of a data network (DN) and to a network component (NC) that is intended to be allowed direct access to the data network (DN) via the access point (AP), wherein the network component (NC) does not yet store authentication data for accessing the data network (DN), wherein the network device (ND) is configured such that it authenticates itself at the access point (AP) using authentication data (CER) when the access point (AP) is connected and the network component (NC) is connected and, if authentication is successful, permits limited access by the connected network component (NC) to the data network (DN) via the access point (AP) for at least such network components (NC) as satisfy one or more predetermined criteria,
wherein the limited access is restricted to the network component (NC) requesting authentication data for the access point (AP) from a registration server (RS) in the data network (DN) .

2. Network device according to Claim 1, wherein the interfaces (1, 2) of the network device (ND) are set up for connection to an access point (AP) of a data network (DN) in the form of a communication network of an automation system and for connection to a network component in the form of a device to be integrated in the automation system.

3. Network device according to Claim 1 or 2, wherein the network device (ND) is set up for communication with a Layer-2 access point (AP).

4. Network device according to Claim 1, wherein the limited access is restricted to access to one or more predetermined subnetworks of the data network (DN).

5. Network device according to Claim 1, wherein the network device (ND) is configured such that the limited access is achieved by means of filtering of data traffic in the network device (ND) and/or the tunneling of data traffic in the network device (ND).

6. Network device according to one of the preceding claims, wherein the authentication data (CER) that the network device (ND) uses to authenticate itself comprise a first digital certificate.

7. Network device according to one of the preceding claims, wherein the authentication data (CER) are stored on the network device (ND) when the latter is started up, or the network device (ND) is configured such that it generates the authentication data (CER) using identification data of the connected network component (NC).

8. Network device according to one of the preceding claims, wherein the network device (ND) stores information that stipulates the connected network components (NC) for which the network device (ND) permits access to the data network (DN) via the access point (AP).

9. Network device according to Claim 8, wherein the network device (ND) permits access to the data network (DN) for such network components (NC) and successfully authenticate themselves to the network device (ND) by means of authentication information (CER'), which differs from the authentication data (CER).

10. Network device according to one of the preceding claims, wherein the network device (ND) is configured such that it comprises an interface for authenticating a user, wherein one or more predetermined actions that are performable by the network device (ND) automatically or when initiated by the user are permitted only on successful authentication of the user via the interface, the predetermined action(s) comprising the activation of the network device (ND) for authentication at a connected access point (AP) and for permitting access by a connected network component (NC) to the data network (DN) and/or the configuration of the network device (ND) by the user.

11. Network device according to Claim 10, wherein the interface for authenticating a user comprises a keypad and/or a reader for biometric data and/or a reader for chip cards and/or a mechanical key switch.

12. Network device according to one of the preceding claims, wherein the network device (ND) comprises an interface for manually inputting and/or for reading in identification data from network components (NC), the network device (ND) permitting access to the data network (DN) only for network components (NC) having identification data that are input and/or read in via the interface.

13. Method for a network component (NC) to directly access a data network (DN) via an access-protected access point (AP), wherein the network component (NC) does not yet store authentication data for accessing the data network (DN), wherein the access point (AP) and the network component (NC) are connected to a network device (ND) according to one of the preceding claims via the interfaces (1, 2) of said network device, the network device (ND) authenticating itself at the access point (AP) using authentication data (CER) and, if authentication is successful, permitting limited access by the connected network component (NC) to the data network (DN) via the access point (AP) for at least such network components (NC) as satisfy one or more predetermined criteria,
wherein the limited access is restricted to the network component (NC) requesting authentication data for the access point (AP) from a registration server (RS) in the data network (DN) .

14. Method according to Claim 13, wherein the access point (AP) checks the authentication data (CER) by communicating with an authentication server (AS) that stores rules for successful authentication.

## Revendications

1. Appareil de réseau (ND), comprenant deux interfaces (1, 2) pour le raccordement à un point d'accès (AP) à accès protégé d'un réseau de données (DN) et à un composant de réseau (NC) qui doit permettre un accès direct au réseau de données (DN) par le biais du point d'accès (AP), dans lequel aucune donnée d'authentification n'est encore enregistrée dans le composant de réseau (NC) pour l'accès au réseau de données (DN), dans lequel l'appareil de réseau (ND) est ainsi équipé qu'il s'authentifie avec des données d'authentification (CER) sur le point d'accès (AP) lorsque le point d'accès (AP) est connecté et le composant de réseau (NC) est connecté et, si l'authentification est réussie, autorise un accès limité du composant de réseau (NC) connecté au réseau de données (DN), par le biais du point d'accès (AP) pour au moins les composants de réseau (NC) qui remplissent un ou plusieurs critère(s) prédéterminé(s),
dans lequel l'accès limité est limité à une demande de données d'authentification pour le point d'accès (AP) par le composant de réseau (NC) sur un serveur d'enregistrement (RS) dans le réseau de données (DN).

2. Appareil de réseau selon la revendication 1, dans lequel les interfaces (1, 2) de l'appareil de réseau (ND) sont équipées sous la forme d'un réseau de communication d'un système d'automatisation pour la connexion à un point d'accès (AP) d'un réseau de données (DN) et sous la forme d'un appareil à intégrer dans le système d'automatisation pour la connexion à un composant de réseau.

3. Appareil de réseau selon la revendication 1 ou 2, dans lequel l'appareil de réseau (ND) est équipé pour la communication avec un point d'accès (AP) dans une couche 2.

4. Appareil de réseau selon la revendication 1, dans lequel l'accès limité est limité à un accès à un ou plusieurs réseau(x) partiel(s) prédéterminé(s) du réseau de données (DN).

5. Appareil de réseau selon la revendication 1, dans lequel l'appareil de réseau (ND) est ainsi conçu que l'accès limité est obtenu par un filtrage de trafic de données dans l'appareil de réseau (ND) et/ou la mise en tunnel de trafic de données dans l'appareil de réseau (ND).

6. Appareil de réseau selon l'une des revendications précédentes, dans lequel les données d'authentification (CER) avec lesquelles l'appareil de réseau (ND) s'authentifie comprennent un premier certificat numérique.

7. Appareil de réseau selon l'une des revendications précédentes, dans lequel les données d'authentification (CER) sont enregistrées sur l'appareil de réseau (ND) à la mise en service de celui-ci ou bien l'appareil de réseau (ND) est ainsi conçu qu'il produit les données d'authentification (CER) en employant des données d'identification du composant de réseau (NC) connecté.

8. Appareil de réseau selon l'une des revendications précédentes, dans lequel des informations sont enregistrées dans l'appareil de réseau (ND), lesquelles déterminent pour quels composants de réseau (NC) connectés, l'appareil de réseau (ND) autorise l'accès au réseau de données (DN) par le biais du point d'accès (AP).

9. Appareil de réseau selon la revendication 8, dans lequel l'appareil de réseau (ND) autorise un accès au réseau de données (DN) pour les composants de réseau (NC) qui s'authentifient avec succès auprès de l'appareil de réseau (ND) au moyen d'informations d'authentification (CER') qui se différencient des données d'authentification (CER).

10. Appareil de réseau selon l'une des revendications précédentes, dans lequel l'appareil de réseau (ND) est ainsi conçu qu'il comprend une interface pour l'authentification d'un utilisateur, dans lequel une ou plusieurs action(s) prédéterminée(s) qui peuvent être exécutées automatiquement par l'appareil de réseau (ND) ou déclenchées par l'utilisateur, sont autorisées uniquement lorsque l'authentification de l'utilisateur par le biais de l'interface est réussie, dans lequel la ou les action(s) prédéterminée(s) comprend/comprennent l'activation de l'appareil de réseau (ND) pour l'authentification à un point d'accès (AP) connecté et pour l'autorisation d'un accès au réseau de données (DN) d'un composant de réseau (NC) connecté et/ou la configuration de l'appareil de réseau (ND) par l'utilisateur.

11. Appareil de réseau selon la revendication 10, dans lequel l'interface pour l'authentification d'un utilisateur comprend un clavier et/ou un lecteur pour des données biométriques et/ou un lecteur pour des cartes à puce et/ou un interrupteur à clé mécanique.

12. Appareil de réseau selon l'une des revendications précédentes, dans lequel l'appareil de réseau (ND) comprend une interface pour la saisie manuelle et/ou la lecture de données d'identification de composants de réseau (NC), dans lequel l'appareil de réseau (ND) autorise un accès au réseau de données (DN) uniquement pour des composants de réseau (NC) avec des informations d'identification saisies et/ou lues par le biais de l'interface.

13. Procédé destiné à l'accès direct d'un composant de réseau (NC) à un réseau de données (DN) par le biais d'un point d'accès (AP) à accès protégé, dans lequel aucune donnée d'authentification n'est encore enregistrée dans le composant de réseau (NC) pour l'accès au réseau de données (DN), dans lequel le point d'accès (AP) et le composant de réseau (NC) sont connectés à un appareil de réseau (ND) selon l'une des revendications précédentes par ses interfaces (1, 2), dans lequel
l'appareil de réseau (ND) s'authentifie avec des données d'authentification (CER) sur le point d'accès (AP) et si l'authentification est réussie, autorise un accès limité du composant de réseau (NC) connecté au réseau de données (DN), par le biais du point d'accès (AP) pour au moins les composants de réseau (NC) qui remplissent un ou plusieurs critère(s) prédéterminé(s),
dans lequel l'accès limité est limité à une demande de données d'authentification pour le point d'accès (AP) par le composant de réseau (NC) sur un serveur d'enregistrement (RS) dans le réseau de données (DN).

14. Procédé selon la revendication 13, dans lequel le point d'accès (AP) communique avec un serveur d'authentification (AS) pour contrôler les données d'authentification (CER) dans lequel sont enregistrées des règles pour une authentification réussie.
